# EUROPEAN PATENT SPECIFICATION

(11) **EP 2 713 550 B1**
(45) Date of publication and mention of the grant of the patent: **20.12.2017**
(21) Application number: 11866150.3
(22) Date of filing: 07.07.2011
(51) Int. Cl.: H04L 12/14, G06F 17/30, H04M 15/00, G06Q 20/14

(54) **CENTRALIZED ONLINE CHARGING METHOD AND EQUIPMENT**
ZENTRALISIERTES ONLINE-LADEVERFAHREN UND VORRICHTUNG
PROCÉDÉ ET ÉQUIPEMENT DE FACTURATION EN LIGNE CENTRALISÉE

(43) Date of publication of application: 02.04.2014
(73) Proprietor: Huawei Technologies Co., Ltd., Longgang District Shenzhen, Guangdong 518129 (CN)
(72) Inventor: XU, Changjiu, Shenzhen Guangdong 518129 (CN); WANG, Shijun, Shenzhen Guangdong 518129 (CN); WANG, Shuguang, Shenzhen Guangdong 518129 (CN); BAO, Xiande, Shenzhen Guangdong 518129 (CN)
(74) Representative: Epping - Hermann - Fischer
(86) International application number: PCT/CN2011/076940
(87) International publication number: WO 2012/159318

(56) References cited:
- EP-A1- 1 990 948
- EP-A1- 2 180 635
- WO-A1-2005/096193
- WO-A2-2008/068121
- CN-A- 101 083 541
- CN-A- 101 330 392
- CN-A- 101 431 745
- CN-A- 101 645 782
- CN-A- 101 959 166
- CN-A- 102 118 727
- CN-A- 102 308 604
- "3rd Generation Partnership Project; Technical Specification Group Services and System Aspects; Telecommunication management; Charging management; Online Charging System (OCS): Applications and interfaces (Release 11)", 3GPP STANDARD; 3GPP TS 32.296, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V11.0.0, 17 June 2011 (2011-06-17), pages 1-88, XP050553236, [retrieved on 2011-06-17]
- "3rd Generation Partnership Project; Technical Specification Group Services and System Aspects; Telecommunication management; Charging management; Rc reference point study (Release 10)", 3GPP STANDARD; 3GPP TR 32.825, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 6 April 2010 (2010-04-06), pages 1-22, XP050402471, [retrieved on 2010-04-06]
- "3rd Generation Partnership Project; Technical Specification Group Services and System Aspects; Telecommunication management; Charging management; Charging architecture and principles (Release 11)", 3GPP STANDARD; 3GPP TS 32.240, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V11.0.0, 30 March 2011 (2011-03-30), pages 1-45, XP050476554, [retrieved on 2011-03-30]
- Anonymous: "Multiple updates in a single update statement ?? - SQL Server Q&A from the SQL Server Central community", , 21 December 2010 (2010-12-21), XP055121282, Retrieved from the Internet: URL:http://ask.sqlservercentral.com/questi ons/30954/multiple-updates-in-a-single-upd ate-statement-.html [retrieved on 2014-06-03]
- HAI HUANG ET AL: "A Least Common Multiple Capacity load-balancing algorithm for content-based online charging system in 3G networks", COMMUNICATIONS AND NETWORKING IN CHINA, 2008. CHINACOM 2008. THIRD INTERNATIONAL CONFERENCE ON, IEEE, PISCATAWAY, NJ, USA, 25 August 2008 (2008-08-25), pages 548-552, XP031364886, ISBN: 978-1-4244-2373-6

## Description

### TECHNICAL FIELD

Embodiments of the present invention relate to the field of mobile communications technologies, and in particular, to a method and a device for cluster online charging.

### BACKGROUND

An online charging system (Online Charging System, OCS) is a real-time charging system. It requires high timeliness and its delay is required to be at a millisecond (ms) level.

In the prior art, an OCS that adopts a cluster manner for charging includes: multiple online charging engines (Online Charging Engine, OCE) that perform rating and debiting operations, and a data center that stores data. That is, in the OCS in the cluster manner, applications and data are separate, and therefore the OCEs need to access the data center that remotely stores data. However, in the prior art, during the debiting process, the OCEs need to repeatedly report change information of related subscriber data information to the remote data center. Each time after receiving the change information reported by the OCEs, the data center updates subscriber data according to the change information reported by the OCEs. Repeated interaction between the OCEs and the data center during the debiting process results in low debiting efficiency of the OCS, which affects real-time performance of the OCS.

EP 2 180 635 A1 (HUAWEI TECH CO LTD [CN]) discloses a method for opening accounting data capabilities including: by a unified accounting data management system, receiving a Balance Control Request (BCR) from a charging system, where the BCR carries a request type; performing an accounting data management operation corresponding to the request type; and returning a Balance Control Answer (BCA) to the charging system, where the BCA carries a result of the accounting data management operations. According to this invention, the accounting data of the user is sharable between the charging systems, and a specific implementation mode for interactions in the accounting data management is provided.

EP 1 990 948 A1 (HUAWEI TECH CO LTD [CN]) describes a charging system and charging method. An online charging system and an offline charging system are interconnected via a shared data center to make up a dual-engine structure, which is able to implement online charging, offline charging, account sharing, switching between prepaid and postpaid modes, and blinding of voice and data services. With this invention, an operator can possess more flexible charging and control capabilities, lower the cost of arrearage and have stronger competitiveness.

"3rd Generation Partnership Project; Technical Specification Group Services and System Aspects; Telecommunication management; Charging management; Online Charging System (OCS): Applications and interfaces (Release 11)", 3GPP STANDARD; 3GPP TS 32.296, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG5, no.V11.0.0, 17 June 2011 (2011-06-17), pages 1-88, describes charging functionality and charging management in 3GPP networks. Specifically, the document contains the architecture and functions of the OCS logical components and derives the functionality of the OCS interfaces. A detailed specification of the interfaces between the logical OCS components is also included.

"3rd Generation Partnership Project; Technical Specification Group Services and System Aspects; Telecommunication management; Charging management; Rc reference point study (Release 10)", 3GPP STANDARD; 3GPP TR 32.825, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no.V11.0.0, 6 April 2010(2010-04-06), pages 1-22, discloses Rc reference point supported by ABMF (Accounting Balance Management Function), which specifically covers the drive and requirement analysis, existing architectures, key issues analysis, etc..

"3rd Generation Partnership Project; Technical Specification Group Services and System Aspects; Telecommunication management; Charging management; Charging architecture and principles (Release 11)", 3GPP STANDARD; 3GPP TS 32.240, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no.V11.0.0, 30 March 2011 (2010-03-30), pages 1-45, discloses charging functionality and charging management in GSM/UMTS and EPS networks. Specifically, the purpose of the document are to lay down common principles of charging in the network and specify a logical common charging architecture that applies to all 3GPP domains, subsystems and services.

### SUMMARY

Embodiments of the present invention provide a method and a device for cluster online charging, so as to solve the problem that low debiting efficiency of an OCS affects real-time performance of the OCS in the prior art.

An embodiment of the present invention provides a method for cluster online charging, including:
parsing an acquired credit control request CCR to obtain an event type, a usage quota, and charging identifier information, where the usage quota includes a used quota and/or a quota applied for;
sending a data load request to a data center, where the data load request carries the event type and the charging identifier information;
receiving subscriber data information that is returned by the data center and related to the event type and the charging identifier information, where the related subscriber data information includes all subscriber data information required for rating and debiting the usage quota;
performing rating and debiting according to the usage quota and the related subscriber data information; and
returning operation information about a change operation performed for the related subscriber data information during the debiting process to the data center;
wherein the operation information is specifically a structured query language SQL operation instruction for performing a change operation for the related subscriber data information; and
the returning operation information about a change operation performed for the related subscriber data information during the debiting process to the data center is specifically:
   aggregating the SQL operation instruction for performing a change operation for the related subscriber data information during the debiting process; and
   returning the aggregated SQL operation instruction to the data center.

An embodiment of the present invention further provides an online charging engine, including:
a parsing unit, configured to parse an acquired credit control request CCR to obtain an event type, a usage quota, and charging identifier information, where the usage quota includes
   a used quota and/or a quota applied for;
a sending unit, configured to send a data load request to a data center, where the data load request carries the event type and the charging identifier information;
a receiving unit, configured to receive subscriber data information that is returned by the data center and related to the event type and the charging identifier information, where the subscriber data information includes all subscriber data information required for rating and debiting the usage quota;
a rating and debiting unit, configured to perform rating and debiting according to the usage quota and the related subscriber data information; where
the sending unit is further configured to return operation information about a change operation performed for the related subscriber data information during the debiting process to the data center, wherein the operation information sent by the sending unit is a structured query language SQL operation instruction used by the rating and debiting unit to perform a change operation for the related subscriber data information;
an aggregation unit, configured to aggregate the SQL operation instruction used by the rating and debiting unit to perform a change operation for the related subscriber data information during the debiting process, wherein
the sending unit is specifically configured to return the SQL operation instruction aggregated by the aggregation unit to the data center.

According to the method and the device for cluster online charging that are provided in the embodiments of the present invention, an OCE aggregates information about a change operation performed for subscriber data information during a debiting process and then returns it to a data center, so that the data center performs a corresponding change operation for local subscriber data information. This reduces interaction between the OCE and the data center during the debiting process, improves debiting efficiency of an OCS, and enhances real-time performance of the OCS.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill
in the art may still derive other drawings from these accompanying drawings without creative efforts.
FIG. 1 is a schematic flowchart of a method for cluster online charging according to an embodiment of the present invention;
FIG. 2 is a schematic flowchart of a method for cluster online charging according to another embodiment of the present invention;
FIG. 3 is a schematic flowchart of a method for cluster online charging according to still another embodiment of the present invention;
FIG. 4a is a schematic structural diagram of a model policy file according to the present invention;
FIG. 4b is a schematic structural diagram of a model description file according to the present invention;
FIG. 5 is a schematic structural diagram of an online charging engine according to an embodiment of the present invention;
FIG. 6 is a schematic structural diagram of an online charging engine according to another embodiment of the present invention;
FIG. 7 is a schematic structural diagram of a data center according to an embodiment of the present invention; and
FIG. 8 is a schematic structural diagram of a data center according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

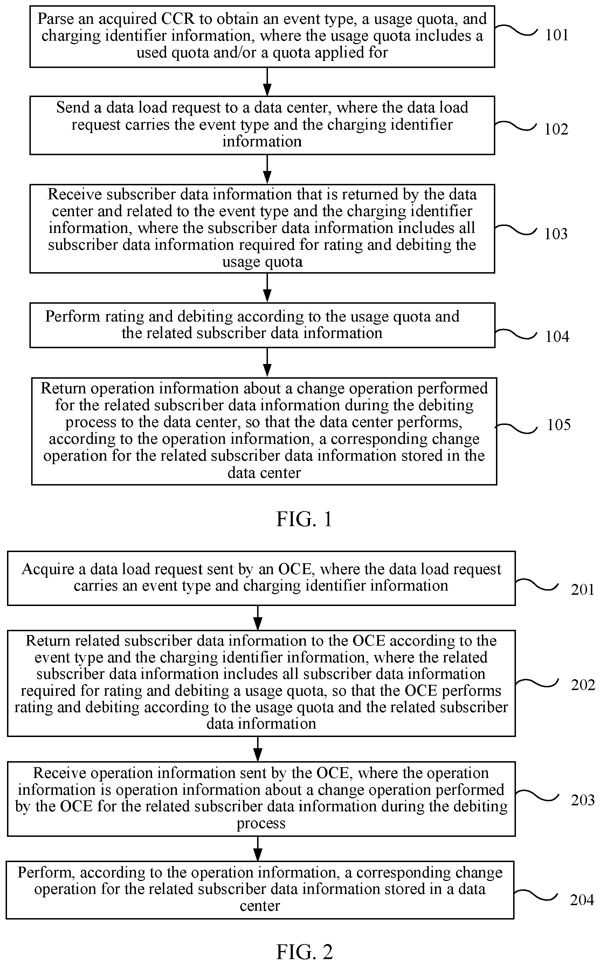

FIG. 1 is a schematic flowchart of a method for cluster online charging according to an embodiment of the present invention. As shown in FIG. 1, in this embodiment, the executor of the following steps is an online charging engine OCE.

The method includes:
S101. Parse an acquired credit control request CCR to obtain an event type, a usage quota, and charging identifier information, where the usage quota includes a used quota and/or a quota applied for.

During an online charging process of an OCS that adopts a cluster manner, multiple OCE nodes perform rating and debiting operations. During rating and debiting processes, each OCE may interact with a data center, which stores subscriber data information, in the OCS.

The rating operation mainly is: calculating, according to an online service use request of a subscriber, an amount corresponding to a service quota that the subscriber has been used or a service quota the subscriber has applied for. The debiting operation mainly is: debiting in the account of the subscriber according to the amount obtained in the rating operation. If the account balance is sufficient, a current service is allowed to be used; and if the account balance is not sufficient, the current service is not allowed to be used.

On the OCS that adopts the cluster manner, when a subscriber needs to request using a certain service, the subscriber may send a credit control request (Credit Control Request, CCR) through a service control point (Service Control Point, SCP) or a content charging gateway (Content Charging Gateway, CCG) to an OCE load balancer (OCE Load Balancer, OCELB) set in the OCS. The OCELB sends, according to an idle level of each OCE in the OCS, the CCR to a relatively idle OCE for processing.

The CCR may be an initial CCR (Initial CCR), an update CCR (Update CCR), and a termination CCR (Termination CCR), where the initial CCR is a session initialization message sent by the SCP or the CCG to the OCS through the OCELB when a session is established, and a usage quota carried in the initial CCR is a quota applied for. When a quota that a subscriber applies for is used up, the SCP or the CCG sends an update CCR to the OCS through the OCELB. A used quota may be reported by using the update CCR and a quota is applied for again, that is, the usage quota carried in the update CCR is the used quota and the quota applied for. During the entire session process of the subscriber, the SCP or the CCG commonly needs to send multiple update CCRs to the OCS through the OCELB. When the session of the subscriber is terminated, the SCP or the CCG sends a termination CCR to the OCS through the OCELB. The session is terminated, and therefore the termination CCR carries only the used quota, and does not carry the quota applied for.

After receiving the CCR, the OCE may obtain the event type, the usage quota, and the charging identifier information of the CCR by decoding and event parsing. The event type is used to indicate a service type that a subscriber applies for, where the event type may exemplarily be a voice event, a short message event, or a video event. The usage quota may be a call duration, the number of short messages, Internet access traffic, or the like. The charging identifier information may be a charging number, an Internet access account of a subscriber, or the like.

It should be noted that the OCE is further capable of obtaining more information by parsing the CCR. This embodiment of the present invention only relates to the event type, the usage quota, and the charging identifier information that are related to the present invention, and other information obtained by the OCE by parsing the CCR is not mentioned in the present invention.
5102. Send a data load request to the data center in the online charging system, where the data load request carries the event type and the charging identifier information.
S103. Receive subscriber data information that is returned by the data center and related to the event type and the charging identifier information, where the subscriber data information includes all subscriber data information required for rating and debiting the usage quota.

After parsing the CCR to obtain the event identifier, the usage quota, and the charging identifier information, the OCE may send the data load request to the data center. According to the event type and the charging identifier information in the data load request, the data center searches a database (which may be a memory database of the data center or a physical database of the data center) of the data center for the subscriber data information related to the event type and the charging identifier information, where the related subscriber data information includes all subscriber data information required for rating and debiting the usage quota. For example, the subscriber data information may exemplarily include a subscriber profile, subscription information, account information, and accumulation information.

The subscriber profile stored in the data center may be basic personal information of a subscriber, which may include information such as the gender, the career, and the employer of the subscriber. Subscription information of a certain subscriber that is stored in the data center includes the usage of various services subscribed by the subscriber, such as information about the number of short messages of a subscribed monthly package, subscribed Internet access traffic, subscribed calling line identification presentation, a subscribed mobile newspaper, and a weather forecast. The account information includes the total account balance of a subscriber, and may further include multiple account books that may include various account book balances and the amount of free resources, such as the number of short messages, the number of call minutes, Internet access traffic, and an account balance of a subscriber. The multiple account books may be a voice service account book, an account book of a voice call reward, an account book of a short message service, an account book of a short message reward, an account book of an Internet access service, an account book of an Internet access traffic reward, and the like. The accumulation information stored in the data center may exemplarily include the number of short messages that a subscriber has used, whether a reward of a certain number of short messages is offered if a subscriber uses a specific number of short messages; or may also be the traffic that a subscriber has used, whether a traffic reward is offered if certain traffic usage is reached, or the like.

The data center may return, according to the event type and the charging identifier information, all subscriber data information, such as a corresponding subscriber profile, subscription information, account information, and accumulation information, required by the OCE during rating and debiting processes to the OCE at one time. Only several types of basic information required by the OCE during the rating and debiting processes are listed in the preceding. In practice, the data center may further return other types of subscriber data information to the OCE for the OCE to perform rating and debiting. In addition, the specific types and specific data of the related subscriber data information that is returned by the data center to the OCE do not constitute limitations to the present invention.
S104. Perform rating and debiting according to the usage quota and the related subscriber data information.

After receiving the subscriber data information returned by the data center, the OCE may store the subscriber data information in a memory database of the OCE or a shared memory of the OCE. During the rating and debiting processes, the OCE may directly access the subscriber data information stored in the memory database or the shared memory of the OCE.

The OCE needs to comprehensively consider the subscriber data information, such as the subscriber profile, the subscription information, the account information, and the accumulation information, to perform rating for a quota that a subscriber has applied for and/or a quota that a subscriber has used. Specifically, the OCE may determine, according to information, such as the gender, the career, and the employer of a subscriber, whether to offer a discount or a reward for an event type applied for. For example, female subscribers may be offered a discount for services, such as a voice call service, a short message service, and an Internet access service, on Women's Day; teacher subscribers may be offered a discount for services, such as a voice call service, a short message service, and an Internet access service, on Teachers' Day; and employees of certain companies may be offered a discount for calls between the employees, and the like.

According to the subscription information, the OCE may determine whether the subscriber subscribes a service that corresponds to the event type applied for and determine a subscription condition of the service, such as whether the subscriber subscribes an Internet access service and the subscribed Internet access service is a monthly package or is calculated based on traffic for charging.

The subscriber information and the subscription information is static information of a subscriber. During the rating process, the OCE performs rating according to the static information; and during the debiting process, the static information is not modified.

Account information and accumulation information of a subscriber are dynamic information of the subscriber. The OCE updates the account information and the accumulation information of the subscriber according to a rating result. For example, if the event type is a voice event, the OCE needs to update the total account balance of the subscriber in the account information, update a voice service account book, and deduct the charge of the used voice service quota. If the accumulated used voice service of the subscriber reaches a certain duration, a reward of a certain call duration is offered and accordingly, an account book of the voice call reward is generated. According to the used voice service quota, the accumulation information further needs to be updated, such as an accumulated call duration reward for a subscriber.
S105. Return operation information about a change operation performed for the related subscriber data information during the debiting process to the data center, so that the data center performs, according to the operation information, a corresponding change operation for the related subscriber data information stored in the data center.

Debiting operations performed by the OCE mainly are operations such as adding, deleting, and modifying the subscriber data information stored in the memory database or the shared memory of the OCE. The debiting operations performed by the OCE relate to various types of subscriber data information, such as account information of a subscriber, multiple account book information of a subscriber, and accumulation information. The subscriber data information relates to a large amount of changed data. In addition, a change of certain data may result in a change of other data, for example, a change of the account book information of the subscriber may result in a change of the accumulation information. In the prior art, the OCE records each variation of the subscriber data information and then sends it to the data center, and since a large variation of the subscriber data information exists, the data center cannot correctly identify changed data and a data variation degree. Therefore, according to the method for cluster online charging provided in this embodiment of the present invention, the OCE locally performs a debiting operation for the subscriber data information stored in the memory database or the shared memory of the OCE, aggregates information about the performed operation, and then returns it to the data center. Specifically, the debiting operations performed by the OCE for the subscriber data information stored in the memory database or the shared memory of the OCE are implemented by using various operation languages. Therefore, the OCE may aggregate an operation instruction for performing a change operation for the subscriber data information stored in the memory database or the shared memory during the locally performed debiting operation process and then return it to the data center. After receiving the operation instruction aggregated by the OCE, the data center may directly perform the operation instruction to change the subscriber data information stored in the data center. It can be seen that, according to the method for cluster online charging provided in this embodiment of the present invention, the data center does not need to specifically parse or identify the operation information returned by the OCE, but only needs to directly perform an operation that has been performed by the OCE, so as to change the subscriber data information stored in the data center.

According to the method for cluster online charging provided in this embodiment of the present invention, an OCE aggregates information about a change operation performed for subscriber data information during a debiting process and then returns it to a data center, so that the data center performs a corresponding change operation for local subscriber data information. This reduces interaction between the OCE and the data center during the debiting process, improves debiting efficiency of an OCS, and enhances real-time performance of the OCS.

FIG. 2 is a schematic flowchart of a method for cluster online charging according to another embodiment of the present invention. As shown in FIG. 2, in this embodiment, the executor of the following steps is a data center, where the data center may specifically be: shared data management (Shared Data Management, SDM), account balance management (Account Balance Management, ABM), or the like.

The method includes:
S201. Acquire a data load request sent by an online charging engine OCE, where the data load request carries an event type and charging identifier information.
S202. Return related subscriber data information to the OCE according to the event type and the charging identifier information, where the related subscriber data information includes all subscriber data information required for rating and debiting a usage quota, so that the OCE performs rating and debiting according to the usage quota and the related subscriber data information.

After acquiring a CCR, the OCE parses the CCR to obtain an event type, a usage quota, and charging identifier information, and sends the data load request to the data center. According to the event type and charging identifier information in the data load request, the data center searches a local database for subscriber data information related to the event type and the charging identifier information.

The data center returns all subscriber data information required by the OCE during rating and debiting processes to the OCE at one time for the OCE to perform rating and debiting. This embodiment of the present invention lists only several types of basic information, including a subscriber profile, subscription information, account information, and accumulation information, required by the OCE during the rating and debiting processes. It should be understood that the data center may further return other types of subscriber data information to the OCE for the OCE to perform rating and debiting. In addition, the other types of subscriber data information returned by the data center to the OCE do not constitute limitations to the present invention.
S203. Receive operation information sent by the OCE, where the operation information is operation information about a change operation performed by the OCE for the related subscriber data information during the debiting process.
S204. Perform, according to the operation information, a corresponding change operation for the related subscriber data information stored in the data center.

After receiving the subscriber data information returned by the data center, the OCE may store the subscriber data information in a memory database or a shared memory of the OCE. During the rating and debiting processes, the OCE may directly access the subscriber data information stored in the memory database or the shared memory of the OCE.

During the debiting process, the OCE may update the subscriber data information stored in the memory database or the shared memory of the OCE, for example, update account balance information of a subscriber, update a bill, a call record, or the like of a subscriber, and update an accumulation and the like.

Debiting operations performed by the OCE mainly are operations such as adding, deleting, and modifying the subscriber data information stored in the memory database or the shared memory of the OCE. The debiting operations performed by the OCE relate to various types of subscriber data information, such as account information of a subscriber, multiple account book information of a subscriber, and accumulation information. The subscriber data information relates to a large amount of changed data. In addition, a change of certain data may result in a change of other data, for example, a change of the account book information of the subscriber may result in a change of the accumulation information. Therefore, according to the method for cluster online charging provided in this embodiment of the present invention, the OCE locally performs a debiting operation for the subscriber data information stored in the memory database or the shared memory of the OCE, aggregates information about the performed operation, and then returns it to the data center.

Specifically, the debiting operations performed by the OCE for the subscriber data information stored in the memory database or the shared memory of the OCE are implemented by using various manipulation languages. Therefore, the OCE may aggregate an operation instruction for performing a change operation for the subscriber data information stored in the memory database or the shared memory during the locally performed debiting operation process and then return it to the data center.

After receiving the operation instruction aggregated by the OCE, the data center may directly perform the operation instruction to change the subscriber data information stored in the data center. The data center does not need to specifically parse or identify the operation information returned by the OCE, but only needs to directly perform an operation that has been performed by the OCE, so as to change the subscriber data information stored in the data center.

According to the method for cluster online charging provided in this embodiment of the present invention, an OCE aggregates information about a change operation performed for subscriber data information during a debiting process and then returns it to a data center; and after receiving the operation information, the data center performs a corresponding change operation for local subscriber data information. This reduces interaction between the OCE and the data center during the debiting process, improves debiting efficiency of an OCS, and enhances real-time performance of the OCS.

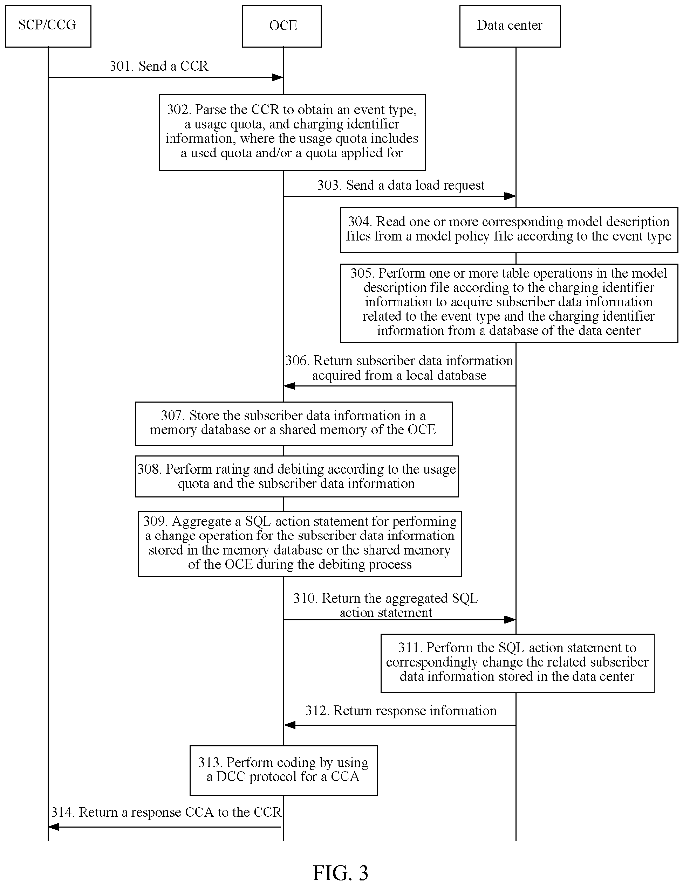

FIG. 3 is a schematic flowchart of a method for cluster online charging according to another embodiment of the present invention. As shown in FIG. 3, this embodiment provides an interaction process between an OCE and a data center in an OCS during a cluster online charging process. The method specifically includes:
S301. The OCE acquires a CCR sent by an SCP or a CCG.

It should be noted that in an OCS that adopts a cluster manner, when a subscriber needs to request using a certain service, the subscriber may send a CCR through the SCP or the CCG to an OCELB set in the OCS. The OCELB sends, according to an idle level of each OCE in the OCS, the CCR to a relatively idle OCE for processing.

In this embodiment, a step of sending, to the OCE through the OCELB, the CCR sent by the SCP is omitted.
S302. The OCE parses the CCR to obtain an event type, a usage quota, and charging identifier information, where the usage quota includes a used quota and/or a quota applied for.

If the CCR is an initial CCR, the usage quota carried in the CCR is the quota applied for. If the CCR is an update CCR, the usage quota carried in the CCR is the used quota and the quota applied for. If the CCR is a termination CCR, the usage quota carried in the CCR is the used quota, and the quota applied for is not carried.

The process of parsing the CCR by the OCE includes: the process of decoding the CCR by using a data communication channel (Data Communication Channel, DCC) protocol and the process of analyzing the event type of the CCR. After the decoding and event analysis, the OCE obtains the event type, the usage quota, and the charging identifier information.

In practice, the OCE is further capable of obtaining more information by parsing the CCR. This embodiment of the present invention only relates to the event type, the usage quota, and the charging identifier information that are related to the present invention, and other information obtained by the OCE by parsing the CCR is not mentioned in the present invention.
S303. The OCE sends a data load request to the data center, where the data load request carries the event type and the charging identifier information.
S304. The data center receives the data load request, acquires the event type and the charging identifier information from the data load request, and reads one or more corresponding model description files from a model policy file according to the event type.
S305. The data center performs one or more table operations in the model description file according to the charging identifier information to acquire subscriber data information related to the event type and the charging identifier information from a database of the data center.
S306. The data center returns the subscriber data information to the OCE, where the subscriber data information is related to the event type and the charging identifier information and acquired from the database of the data center.
S304 to S306 are the process of returning, by the data center, the related subscriber data information to the OCE according to the event type and the charging identifier information that are carried in the data load request.

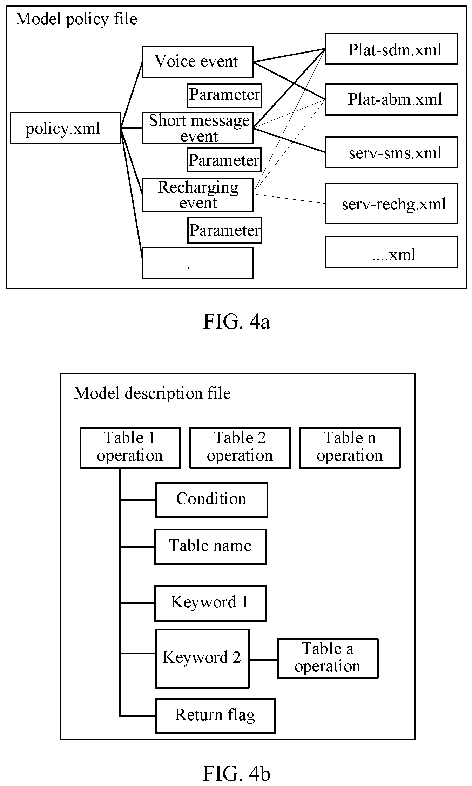

Specifically, the data center may locally establish a data model description file in advance. The data model description file includes a model policy file and a model description file, as shown in FIG. 4a and FIG. 4b respectively, where the model policy file is used to identify one or more model description files read for different event types, each model description file includes one or more table operations, each table operation is used to query one or more types of subscriber data information related to the charging identifier information in the database of the data center, and the performing result of each table operation is one or more types of subscriber data information queried in the database of the data center.

Referring to FIG. 4a, model description files that need to be read for a voice event type include: Plat-sdm.xml and Plat-abm.xml. Model description files that need to be read for a short message event include: Plat-sdm.xml, Plat-abm.xml, and Serv-sms.xml. Model description files that need to be read for a recharging event type include: Plat-sdm.xml, Plat-abm.xml, and Serv-rechg.xml.

FIG. 4b is a schematic structural diagram of a model description file. Each model description file may include one or more table operations: table 1 operation, table 2 operation ... table n operation. After the data center performs each table operation, different subscriber data information (corresponding to a return flag) may be returned from the database of the data center. For example, after the data center performs the table 1 operation, subscriber information may be returned from the database of the data center, where the subscriber information may be the name, gender, age, or the like of a subscriber; and after the data center performs the table 2 operation, extensible information of the subscriber may be returned from the database of the data center, where the extensible information of the subscriber may the career, employer, or the like of the subscriber. After the data center performs the table 1 operation and the table 2 operation, the subscriber information and the extensible information of the subscriber that are returned from the database of the data center constitute a subscriber profile. After the data center performs the table 3 ... table n operation, information about the total account balance of a subscriber, information about various account books of the subscriber, subscription information about various services of the subscriber, various accumulation information of the subscriber, and the like may be separately returned from the database of the data center.

Each table operation includes: keyword 1 (where) and one or more conditions (condition). A table name (tablename) indicates that each table operation needs to meet one or more conditions to query one or more types of subscriber data information related to the charging identifier information in the database of the data center. Keyword 2 (for) may be ignored. A statement for querying related data in the database of the data center may be constituted by combining a keyword and one or more conditions in each table operation, for example, select * from tablename1 where field 1=*** and field 2=***, where field 1 commonly may be a charging number or an Internet access account. When the charging number or the Internet access account meets the conditions, data may be queried in the local database.

A specific example is used for description in the following:
For example, if an event type is a voice event and a charging identifier is a mobile phone number 189..., in S304, the data center reads corresponding model description files Plat-sdm.xml and Plat-abm.xml in the model policy file shown in FIG. 4a according to the voice event. For structures of Plat-sdm.xml and Plat-abm.xml, reference may be made to FIG. 4b, where both Plat-sdm.xml and Plat-abm.xml may include one or more table operations. Taking Plat-sdm.xml as an example, it is assumed that a condition that needs to be met for the table 1 operation is that a mobile phone number is "189...". A charging identifier returned by the OCE is a mobile phone number 189..., which meets the condition of the table 1 operation. Therefore, the OCE may perform the table 1 operation. After performing the table 1 operation, the OCE may acquire subscriber information from the database of the data center, where the subscriber information may be information about the name, the gender, the age, or the like of a subscriber. Similarly, if one or more conditions for the table n operation are met, the OCE may perform the table n operation and acquire corresponding subscriber data information from the database of the data center.
   S307. The OCE stores the subscriber data information returned by the data center in a memory database or a shared memory of the OCE.
   S308. The OCE accesses the subscriber data information stored in the database of the OCE and performs rating and debiting according to the usage quota and the subscriber data information. S309. The OCE aggregates a SQL operation instruction for performing a change operation for the subscriber data information stored in the memory database or the shared memory of the OCE during the debiting process.
   S310. The OCE returns the aggregated SQL operation instruction to the data center.

In S308, debiting operations performed by the OCE mainly are operations such as adding, deleting, and modifying the subscriber data information stored in the memory database or the shared memory of the OCE. The debiting operations performed by the OCE relate to various types of subscriber data information, and the subscriber data information relates to a large amount of changed data. In addition, a change of certain data may result in a change of other data. According to the method for cluster online charging provided in this embodiment of the present invention, the OCE locally performs a debiting operation for the subscriber data information stored in the memory database or the shared memory of the OCE, aggregates information about the performed operation, and then returns it to the data center.

Specifically, the debiting operations performed by the OCE for the subscriber data information stored in the memory database or the shared memory of the OCE are implemented by using various manipulation languages. In this embodiment, a structured query language (Structured Query Language, SQL) operation performed by the OCE for the subscriber data information stored in the memory database or the shared memory of the OCE is used as an example. The OCE commonly performs an adding operation, a deleting operation, or a change operation for the data information stored in the local memory database or the shared memory by adopting an SQL operation instruction. Therefore, as a feasible implementation manner, the OCE may locally set an SQL engine layer, aggregate, through the engine layer, the SQL operation instruction used by the OCE to perform a change operation for the subscriber data information, and return the aggregated SQL operation instruction to the data center.
S311. The data center performs the SQL operation instruction to correspondingly change the related subscriber data information stored in the data center.

After receiving the SQL operation instruction returned by the OCE, the data center does not need to specifically parse or identify the SQL operation instruction returned by the OCE, but only needs to directly perform these SQL operation instructions, so as to correspondingly change the related subscriber data information stored in the data center.
S312. The data center returns response information to the OCE.
S313. The OCE performs coding by using a DCC protocol for a credit control answer (Credit Control Answer, CCA).
S314. The OCE returns the CCA to the SCP.

It should be noted that, for brevity of the description, the foregoing method embodiments are represented as a series of actions. However, persons skilled in the art should understand that the present invention is not limited to the order of the described actions, because according to the present invention, some steps may adopt other order or occur simultaneously. It should be further understood by persons skilled in the art that the described embodiments all belong to exemplary embodiments, and the involved actions and modules are not necessarily required by the present invention.

In the foregoing embodiments, the description of each of the embodiments has respective focuses. For a part that is not described in detail in a certain embodiment, reference may be made to related descriptions in other embodiments.

Persons of ordinary skill in the art may understand that all or a part of the steps in the method embodiments may be implemented by a program instructing relevant hardware. The program may be stored in a computer readable storage medium. When the program is run, the steps in the method embodiments are performed. The storage medium may be any medium that is capable of storing program codes, such as a ROM, a RAM, a magnetic disk, or an optical disk.

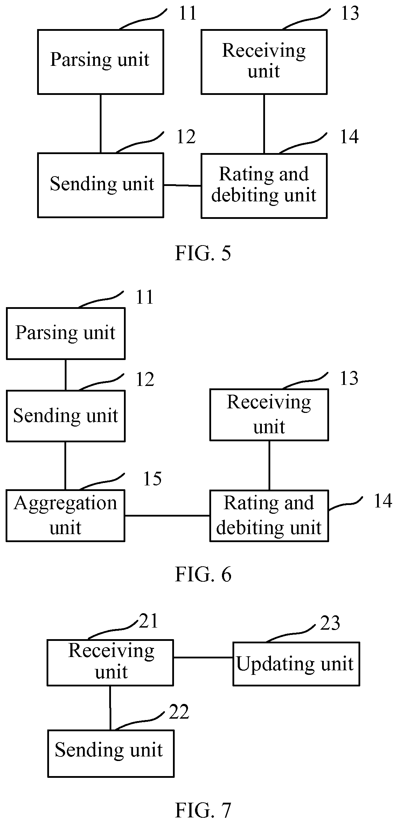

FIG. 5 is a schematic structural diagram of an online charging engine according to an embodiment of the present invention. As shown in FIG. 5, the online charging engine may include: a parsing unit 11, a sending unit 12, a receiving unit 13, and a rating and debiting unit 14.

The parsing unit 11 is configured to parse an acquired credit control request CCR to obtain an event type, a usage quota, and charging identifier information, where the usage quota includes a used quota and/or a quota applied for;
the sending unit 12 is configured to send a data load request to a data center, where the data load request carries the event type and the charging identifier information;
the receiving unit 13 is configured to receive subscriber data information that is returned by the data center and related to the event type and the charging identifier information, where the subscriber data information includes all subscriber data information required for rating and debiting the usage quota;
the rating and debiting unit 14 is configured to perform rating and debiting according to the usage quota and the related subscriber data information; and
the sending unit 12 is further configured to return operation information about a change operation performed for the related subscriber data information during the debiting process to the data center, so that the data center performs, according to the operation information, a corresponding change operation for the related subscriber data information stored in the data center. Specifically, the parsing unit 11 of the OCE may perform DCC decoding and event parsing for the acquired CCR to obtain the event type, the usage quota, and the charging identifier information of the CCR. The sending unit 12 sends the data load request to the data center, where the request carries the event type and the charging identifier information that are parsed and acquired by the parsing unit 11. The data center searches, according to the event type and charging identifier information in the data load request, a local database (which may be a local memory database or may be a local physical database) for subscriber data information related to the event type and the charging identifier information, and sends the subscriber data information to the OCE. After the receiving unit 13 of the OCE receives the subscriber data information, the rating and debiting unit 14 may locally access the subscriber data information to perform rating and debiting operations. After the rating and debiting unit 14 completes the rating and debiting operations, the sending unit 12 may return the operation information about the change operation performed for the related subscriber data information during the debiting process to the data center. Specifically, a debiting operation performed by the rating and debiting unit 14 for the subscriber data information stored in a memory database or a shared memory of the OCE is implemented by using various manipulation languages. Therefore, the sending unit 12 may aggregate an operation instruction used by the rating and debiting unit 14 to perform a change operation for the subscriber data information stored in the memory database or the shared memory during the locally performed debiting operation process, and then return it to the data center. After receiving the operation instruction aggregated by the OCE, the data center may directly perform the operation instruction to change the subscriber data information stored in the data center. The OCE provided in this embodiment of the present invention enables the following: The data center does not need to specifically parse or identify the operation information returned by the OCE, but only needs to directly perform an operation that has been performed by the OCE, so as to change the subscriber data information stored in the data center.

FIG. 6 is a schematic structural diagram of an online charging engine according to another embodiment of the present invention. As shown in FIG. 6, the online charging engine may include: a parsing unit 11, a sending unit 12, a receiving unit 13, and a rating and debiting unit 14.

Operation information sent by the sending unit 12 is a structured query language SQL operation instruction used by the rating and debiting unit 14 to perform a change operation for related subscriber data information.

As a feasible implementation manner, the online charging engine provided in this embodiment may further include:
an aggregation unit 15, configured to aggregate the SQL operation instruction used by the rating and debiting unit 14 to perform a change operation for the related subscriber data information during the debiting process.

The sending unit 12 may be specifically configured to return the SQL operation instruction aggregated by the aggregation unit 15 to the data center, so that the data center performs the SQL operation instruction to correspondingly change the related subscriber data information stored in the data center.

The online charging engine provided in this embodiment of the present invention is a device that performs the method for cluster online charging provided in the embodiments of the present invention, and corresponds to the embodiments of the method for cluster online charging that are provided in the present invention. For the detailed process of performing, by the functional modules of the online charging engine, the method for cluster online charging, reference may be made to the method embodiments, and details are not repeated herein.

According to the online charging engine OCE provided in this embodiment, the OCE aggregates information about a change operation performed for subscriber data information during a debiting process and then returns it to a data center, so that the data center performs a corresponding change operation for local subscriber data information. This reduces interaction between the OCE and the data center during the debiting process, improves debiting efficiency of an OCS, and enhances real-time performance of the OCS.

FIG. 7 is a schematic structural diagram of a data center according to an embodiment of the present invention. As shown in FIG. 7, the data center may include: a receiving unit 21, a sending unit 22, and an updating unit 23.

The receiving unit 21 is configured to acquire a data load request sent by an online charging engine OCE, where the data load request carries an event type and charging identifier information;
the sending unit 22 is configured to return related subscriber data information to the OCE according to the event type and the charging identifier information, where the related subscriber data information includes all subscriber data information required for rating and debiting a usage quota, so that the OCE performs rating and debiting according to the usage quota and the related subscriber data information;
the receiving unit 21 is further configured to receive operation information sent by the OCE, where the operation information is operation information about a change operation performed by the OCE for the related subscriber data information during the debiting process; and
the updating unit 23 is configured to perform, according to the operation information, a corresponding change operation for the related subscriber data information stored in the data center.

Specifically, after acquiring a CCR, the OCE parses the CCR to obtain an event type, a usage quota, and charging identifier information, and sends the data load request to the data center. After the receiving unit 21 of the data center receives the data load request, the sending unit 22 searches, according to the event type and charging identifier information in the data load request, a local database for subscriber data information related to the event type and the charging identifier information, and returns all subscriber data information required by the OCE during rating and debiting processes at one time to the OCE for the OCE to perform rating and debiting.

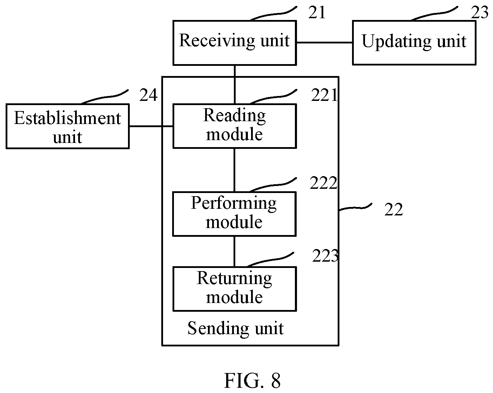

After receiving the subscriber data information returned by the data center, the OCE may store the subscriber data information in a memory database or a shared memory of the OCE, and perform rating and debiting operations for the subscriber data information stored in the memory database or the shared memory of the OCE. The OCE may return operation information about a change operation performed for the related subscriber data information during the debiting process to the data center. After the receiving unit 21 of the data center receives the operation information returned by the OCE, the updating unit 23 performs, according to the operation information, a corresponding change operation for the related subscriber data information stored in the data center. FIG. 8 is a schematic structural diagram of a data center according to another embodiment of the present invention. As shown in FIG. 8, the data center may include: a receiving unit 21, a sending unit 22, and an updating unit 23.

The data center provided by this embodiment may further include:
an establishment unit 24, configured to establish a data model description file, where the data model description file includes: a model policy file and a model description file, the model policy file is used to identify one or more model description files read for different event types, each model description file includes one or more table operations, each table operation is used to query one or more types of subscriber data information related to the charging identifier information in a database of the data center, and the performing result of each table operation is one or more types of subscriber data information queried in the database of the data center.

As a feasible implementation manner, the sending unit 22 may include: a reading module 221, a performing module 222, and a returning module 223.

The reading module 221 is configured to read one or more corresponding model description files from the model policy file according to the event type;
the performing module 222 is configured to perform one or more table operations in the model description file according to the charging identifier information to acquire subscriber data information related to the event type and the charging identifier information from the database of the data center; and
the returning module 223 is configured to return the subscriber data information to the OCE, where the subscriber data information is related to the event type and the charging identifier information and acquired from the database of the data center.

Operation information received by the receiving unit 21 is a structured query language SQL operation instruction used by the OCE to perform a change operation for the related subscriber data information.

Correspondingly, the updating unit 23 may specifically be configured to: perform the SQL operation instruction and correspondingly change the related subscriber data information stored in the data center.

The data center provided in this embodiment of the present invention is a device for performing the method for cluster online charging that is provided in the embodiments of the present invention, and corresponds to the embodiments of the method for cluster online charging method that are provided in the present invention. For the detailed process of performing, by the functional modules of the data center, the method for cluster online charging, reference may be made to the method embodiments, and details are not repeated herein.

According to the data center provided in this embodiment of the present invention, an OCE aggregates information about a change operation performed for subscriber data information during a debiting process and then returns it to the data center; and after receiving the operation information, the data center performs a corresponding change operation for local subscriber data information. This reduces interaction between the OCE and the data center during the debiting process, improves debiting efficiency of an OCS, and enhances real-time performance of the OCS. Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from scope of the technical solutions of the embodiments of the present invention.

## Claims

1. A method for online charging, comprising:
parsing (101) an acquired credit control request, CCR, to obtain an event type, a usage quota, and charging identifier information, wherein the usage quota comprises a used quota and/or a quota applied for;
sending (102) a data load request to a data center, wherein the data load request carries the event type and the charging identifier information;
receiving (103) subscriber data information that is returned by the data center and related to the event type and the charging identifier information, wherein the related subscriber data information comprises all subscriber data information required for rating and debiting the usage quota;
performing (104) rating and debiting according to the usage quota and the related subscriber data information; and
returning (105) operation information about a change operation performed for the related subscriber data information during the debiting process to the data center, **characterized by** comprising:
wherein the operation information is specifically a structured query language, SQL, operation instruction for performing a change operation for the related subscriber data information; and
the returning operation information about a change operation performed for the related subscriber data information during the debiting process to the data center is specifically:
aggregating the SQL operation instruction for performing a change operation for the related subscriber data information during the debiting process; and
returning the aggregated SQL operation instruction to the data center.

2. An online charging engine, comprising:
a parsing unit (11), configured to parse an acquired credit control request, CCR, to obtain an event type, a usage quota, and charging identifier information, wherein the usage quota comprises a used quota and/or a quota applied for;
a sending unit (12), configured to send a data load request to a data center, wherein the data load request carries the event type and the charging identifier information;
a receiving unit (13), configured to receive subscriber data information that is returned by the data center and related to the event type and the charging identifier information, wherein the subscriber data information comprises all subscriber data information required for rating and debiting the usage quota;
a rating and debiting unit (14), configured to perform rating and debiting according to the usage quota and the related subscriber data information; wherein
the sending unit is further configured to return operation information about a change operation performed for the related subscriber data information during the debiting process to the data center, **characterized by** comprising:
wherein the operation information sent by the sending unit is a structured query language, SQL, operation instruction used by the rating and debiting unit to perform a change operation for the related subscriber data information;
an aggregation unit (15), configured to aggregate the SQL operation instruction used by the rating and debiting unit to perform a change operation for the related subscriber data information during the debiting process, wherein
the sending unit (12) is specifically configured to return the SQL operation instruction aggregated by the aggregation unit to the data center.

## Patentansprüche

1. Verfahren zur Online-Rechnungsstellung, das die folgenden Schritte umfasst:
Parsing (10) einer erfassten Guthabenkontrollanfrage, CCR, um eine Ereignisart, eine Nutzungsquote und Rechnungsstellungskennungsinformationen zu erhalten, wobei die Nutzungsquote eine genutzte Quote und/oder eine beantragte Quote umfasst;
Senden (102) einer Datenladeanfrage an ein Datenzentrum, wobei die Datenladeanfrage die Ereignisart und die Rechnungsstellungskennungsinformationen führt;
Empfangen (103) von Teilnehmerdateninformationen, die vom Datenzentrum zurückgesandt werden und die mit der Ereignisart und den Rechnungsstellungskennungsinformationen zusammenhängen, wobei die zusammenhängenden Teilnehmerdateninformationen alle Teilnehmerdateninformationen umfassen, die zum Bewerten und Abbuchen der Nutzungsquote erforderlich sind;
Durchführen (104) von Bewerten und Abbuchen gemäß der Nutzungsquote und den zusammenhängenden Teilnehmerdateninformationen; und
Zurücksenden (105) von Operationsinformationen über eine Änderungsoperation, die für die zusammenhängenden Teilnehmerdateninformationen während des Abbuchungsprozesses durchgeführt wird, zum Datenzentrum, **dadurch gekennzeichnet,**
**dass** es Folgendes umfasst:
wobei die Operationsinformationen insbesondere ein Operationsbefehl einer "Structured Query Language" bzw. SQL-Operationsbefehl zum Durchführen einer Änderungsoperation für die zusammenhängenden Teilnehmerdateninformationen sind; und
das Zurücksenden von Operationsinformationen über eine Änderungsoperation, die für die zusammenhängenden Teilnehmerdateninformationen während des Abbuchungsprozesses durchgeführt wird, zum Datenzentrum insbesondere Folgendes bedeutet:
Aggregieren des SQL-Operationsbefehls zum Durchführen einer Änderungsoperation für die zusammenhängenden Teilnehmerdateninformationen während des Abbuchungsprozesses; und
Zurückenden des aggregierten SQL-Operationsbefehls zum Datenzentrum.

2. Online-Rechnungsstellungsengine, die Folgendes umfasst:
eine Parsing-Einheit (11), die ausgelegt ist zum Parsen einer erfassten Guthabenkontrollanfrage, CCR, um eine Ereignisart, eine Nutzungsquote und Rechnungsstellungskennungsinformationen zu erhalten, wobei die Nutzungsquote eine genutzte Quote und/oder eine beantragte Quote umfasst;
eine Sendeeinheit (12), die ausgelegt ist zum Senden einer Datenladeanfrage an ein Datenzentrum, wobei die Datenladeanfrage die Ereignisart und die Rechnungsstellungskennungsinformationen führt;
eine Empfangseinheit (13), die ausgelegt ist zum Empfangen von Teilnehmerdateninformationen, die vom Datenzentrum zurückgesandt werden und die mit der Ereignisart und den Rechnungsstellungskennungsinformationen zusammenhängen, wobei die Teilnehmerdateninformationen alle Teilnehmerdateninformationen umfassen, die zum Bewerten und Abbuchen der Nutzungsquote erforderlich sind;
eine Bewertungs- und Abbuchungseinheit (14), die ausgelegt ist zum Durchführen von Bewerten und Abbuchen gemäß der Nutzungsquote und den zusammenhängenden Teilnehmerdateninformationen; wobei
die Sendeeinheit ferner ausgelegt ist zum Zurücksenden von Operationsinformationen über eine Änderungsoperation, die für die zusammenhängenden Teilnehmerdateninformationen während des Abbuchungsprozesses durchgeführt wird, zum Datenzentrum, **dadurch gekennzeichnet**, Folgendes zu umfassen:
wobei die von der Sendeeinheit gesendeten Operationsinformationen ein Operationsbefehl einer "Structured Query Language" bzw. SQL-Operationsbefehl sind, der von der Bewertungs- und Abbuchungseinheit zum Durchführen einer Änderungsoperation für die zusammenhängenden Teilnehmerdateninformationen verwendet wird;
eine Aggregationseinheit (15), die ausgelegt ist zum Aggregieren des SQL-Operationsbefehls, der von der Bewertungs- und Abbuchungseinheit zum Durchführen einer Änderungsoperation für die zusammenhängenden Teilnehmerdateninformationen während des Abbuchungsprozesses verwendet wird, wobei
die Sendeeinheit (12) insbesondere ausgelegt ist zum Zurückenden des von der Aggregationseinheit aggregierten SQL-Operationsbefehls zum Datenzentrum.

## Revendications

1. Procédé de facturation en ligne, consistant à :
analyser (101) une demande de contrôle de crédit (CCR) acquise, afin d'obtenir un type d'événement, un quota d'usage et des informations d'identification de facturation, le quota d'usage comprenant un quota d'utilisation et/ou un quota d'application ;
envoyer (102) une demande de chargement de données à un centre de données, la demande de chargement de données transportant le type d'événement et les informations d'identification de facturation ;
recevoir (103) des informations de données d'abonné qui sont renvoyées par le centre de données et qui sont apparentées au type d'événement et aux informations d'identification de facturation, les informations de données d'abonné apparentées comprenant toutes les informations de données d'abonné requises pour évaluer et débiter le quota d'usage ;
réaliser (104) une évaluation et un débit selon le quota d'usage et les informations de données d'abonné apparentées ; et
renvoyer (105) au centre de données des informations d'opération au sujet d'une opération de modification réalisée pour les informations de données d'abonné apparentées pendant le processus de débit, le procédé étant **caractérisé en ce que** :
les informations d'opération étant en particulier une instruction d'opération en langage d'interrogation structuré (SQL) pour la réalisation d'une opération de modification pour les informations de données d'abonné apparentées ; et
le renvoi au centre de données d'informations d'opération au sujet d'une opération de modification réalisée pour les informations de données d'abonné apparentées pendant le processus de débit consiste en particulier à :
agréger l'instruction d'opération SQL pour la réalisation d'une opération de modification pour les informations de données d'abonné apparentées pendant le processus de débit ; et
renvoyer l'instruction d'opération SQL agrégée au centre de données.

2. Moteur de facturation en ligne, comprenant :
une unité d'analyse (11), conçue pour analyser une demande de contrôle de crédit (CCR) acquise, afin d'obtenir un type d'événement, un quota d'usage et des informations d'identification de facturation, le quota d'usage comprenant un quota d'utilisation et/ou un quota d'application ;
une unité d'envoi (12), conçue pour envoyer une demande de chargement de données à un centre de données, la demande de chargement de données transportant le type d'événement et les informations d'identification de facturation ;
une unité de réception (13), conçue pour recevoir des informations de données d'abonné qui sont renvoyées par le centre de données et qui sont apparentées au type d'événement et aux informations d'identification de facturation, les informations de données d'abonné comprenant toutes les informations de données d'abonné requises pour évaluer et débiter le quota d'usage ;
une unité d'évaluation et de débit (14), conçue pour réaliser une évaluation et un débit selon le quota d'usage et les informations de données d'abonné apparentées,
l'unité d'envoi étant en outre conçue pour renvoyer au centre de données des informations d'opération au sujet d'une opération de modification réalisée pour les informations de données d'abonné apparentées pendant le processus de débit, le moteur de facturation en ligne étant **caractérisé en ce qu'**il comprend :
les informations d'opération envoyées par l'unité d'envoi étant une instruction d'opération en langage d'interrogation structuré (SQL) utilisée par l'unité d'évaluation et de débit pour réaliser une opération de modification pour les informations de données d'abonné apparentées ;
une unité d'agrégation (15), conçue pour agréger l'instruction d'opération SQL utilisée par l'unité d'évaluation et de débit pour réaliser une opération de modification pour les informations de données d'abonné apparentées pendant le processus de débit,
l'unité d'envoi (12) étant spécialement conçue pour renvoyer au centre de données l'instruction d'opération SQL agrégée par l'unité d'agrégation.
